# EUROPEAN PATENT APPLICATION

(11) **EP 4 579 826 A1**
(43) Date of publication of application: **02.07.2025**
(21) Application number: 24218182.4
(22) Date of filing: 06.12.2024
(51) Int. Cl.: H01M 8/04089, H01M 8/249, H01M 8/2475, H01M 8/2484, H01M 8/04082

(54) **FUEL CELL SYSTEM**

(30) Priority: 26.12.2023 JP 2023219328
(71) Applicant: Aisin Corporation, Aichi 448-8650 (JP)
(72) Inventor: TAKAHASHI, Munehiro, KARIYA, AICHI 448-8650 (JP); KATO, Kenji, KARIYA, AICHI 448-8650 (JP); UEYAMA, Koji, KARIYA, AICHI 448-8650 (JP); NAGAYA, Masahiro, KARIYA, AICHI 448-8650 (JP)
(74) Representative: Cabinet Beau de Loménie

(57) **Abstract**

A fuel cell system includes a fuel cell unit (20) having a substantially rectangular parallelepiped shape, the fuel cell unit (20) including:
a plurality of power generation modules (30) each including a fuel cell stack that generates power using fuel gas and oxidant gas, and a heat-insulating module case that accommodates the fuel cell stack;
a plurality of fuel supply systems including a plurality of fuel supply lines that supply the fuel gas to each of the plurality of power generation modules (30);
a plurality of oxidant gas supply systems including a plurality of oxidant gas supply lines that supply the oxidant gas to each of the plurality of power generation modules (30); and
a frame (21) to which the plurality of power generation modules (30), the plurality of fuel supply systems, and the plurality of oxidant gas supply systems are fixed.

## Description

### TECHNICAL FIELD

The present specification discloses a fuel cell system.

### BACKGROUND DISCUSSION

Conventionally, as this type of fuel cell system, there has been developed a fuel cell system including a plurality of fuel cells (cell stacks) disposed side by side in a matrix in the up-down direction and the right-left direction, a plurality of reformers formed in a substantially flat plate-shape spreading in the up-down direction and the right-left direction and arranged side by side in the right-left direction, two fuel cell units each including an exhaust gas combustion unit, and a substantially rectangular parallelepiped housing accommodating the two fuel cell units (See, for example, JP 2021-15674 A.). In this fuel cell system, a plurality of fuel cells, a plurality of reformers, and an exhaust gas combustion unit are disposed in this order in the front-rear direction in the internal space of the housing.

There has also been developed a fuel cell system including a tubular reformer extending in an axial direction, a plurality of cell stacks arranged side by side in a circumferential direction on a radially outer side of the reformer and radially facing the reformer, and an exhaust gas combustor disposed on a radially inner side of the reformer and radially facing the reformer (See, for example, JP 2018-6237 A.). The cell stack includes a plurality of flat plate-shaped cells stacked in the radial direction.

In the fuel cell system described in JP 2021-15674 A, since one module is constituted by a plurality of cell stacks, when each auxiliary machine for supplying raw fuel gas, air, or the like is disposed in units of modules, the size of the auxiliary machine tends to increase, which leads to an increase in cost. In addition, since the size of each auxiliary machine increases, it becomes difficult to accommodate the auxiliary machine in a limited space of the housing, and the size of the housing also increases due to a dead space. In addition, in the fuel cell system described in JP 2018-6237 A, since the fuel cell system has a cylindrical shape, an installation space to be secured is not reduced.

A need thus exists for a fuel cell system which is not susceptible to the drawback mentioned above.

### SUMMARY

The fuel cell system of the present disclosure adopts the following means in order to achieve the above main object.

A fuel cell system includes a fuel cell unit having a substantially rectangular parallelepiped shape, the fuel cell unit including:
a plurality of power generation modules each including a fuel cell stack that generates power using fuel gas and oxidant gas, and a heat-insulating module case that accommodates the fuel cell stack;
a plurality of fuel supply systems including a plurality of fuel supply lines that supply the fuel gas to each of the plurality of power generation modules;
a plurality of oxidant gas supply systems including a plurality of oxidant gas supply lines that supply the oxidant gas to each of the plurality of power generation modules; and
a frame to which the plurality of power generation modules, the plurality of fuel supply systems, and the plurality of oxidant gas supply systems are fixed.

The fuel cell system of the present disclosure includes a fuel cell unit having a substantially rectangular parallelepiped shape in which a power generation module including a fuel cell stack and a heat-insulating module case is accommodated and a fuel supply system and an oxidant gas supply system are accommodated in each power generation module. By providing the fuel supply system and the oxidant gas supply system for each power generation module, the individual sizes of the constituent members (auxiliary machines) of the fuel supply system and the oxidant gas supply system can be reduced, and these constituent members can be accommodated in a limited space of the unit. As a result, the dead space can be reduced, and the fuel cell system can be further downsized.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is an external perspective view of a fuel cell system;
Fig. 2 is an internal perspective view of a fuel cell unit included in the fuel cell system;
Fig. 3 is an internal side view of the fuel cell unit;
Fig. 4 is an internal perspective view of the fuel cell unit excluding a frame;
Fig. 5 is a schematic configuration view of the fuel cell system;
Fig. 6 is an external perspective view of a hydrogen blower sub-assembly;
Fig. 7 is an external perspective view of an air blower sub-assembly; and
Fig. 8 is an external perspective view of a condensed water tank sub-assembly.

### DETAILED DESCRIPTION

Embodiments for carrying out the present disclosure will be described with reference to the drawings.

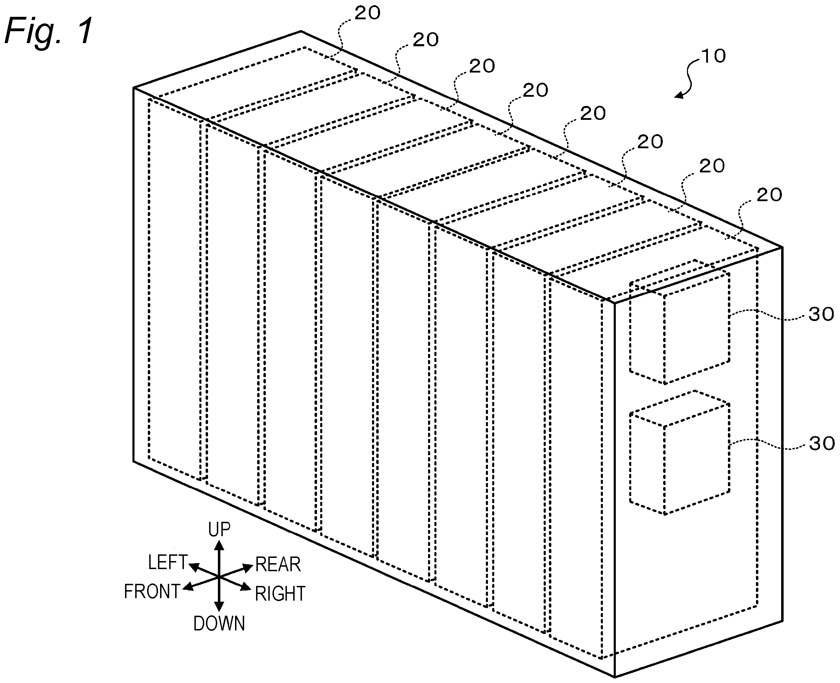

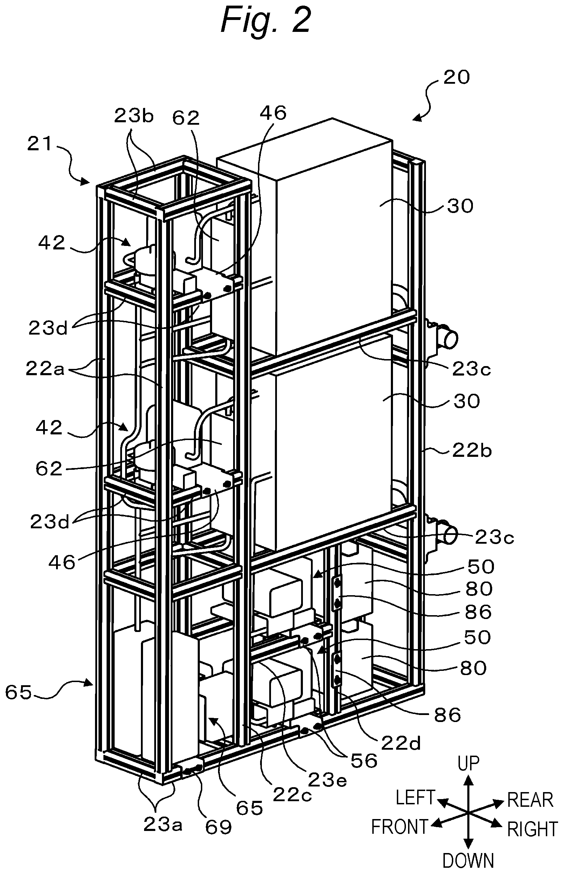

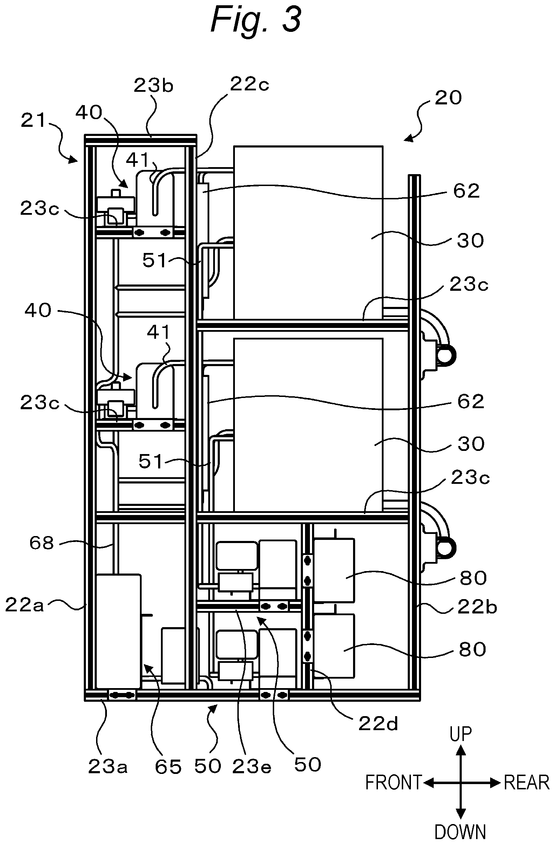

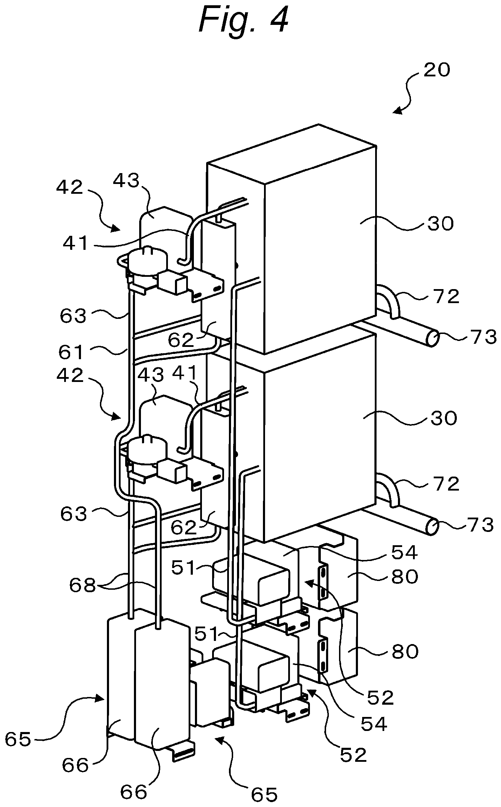

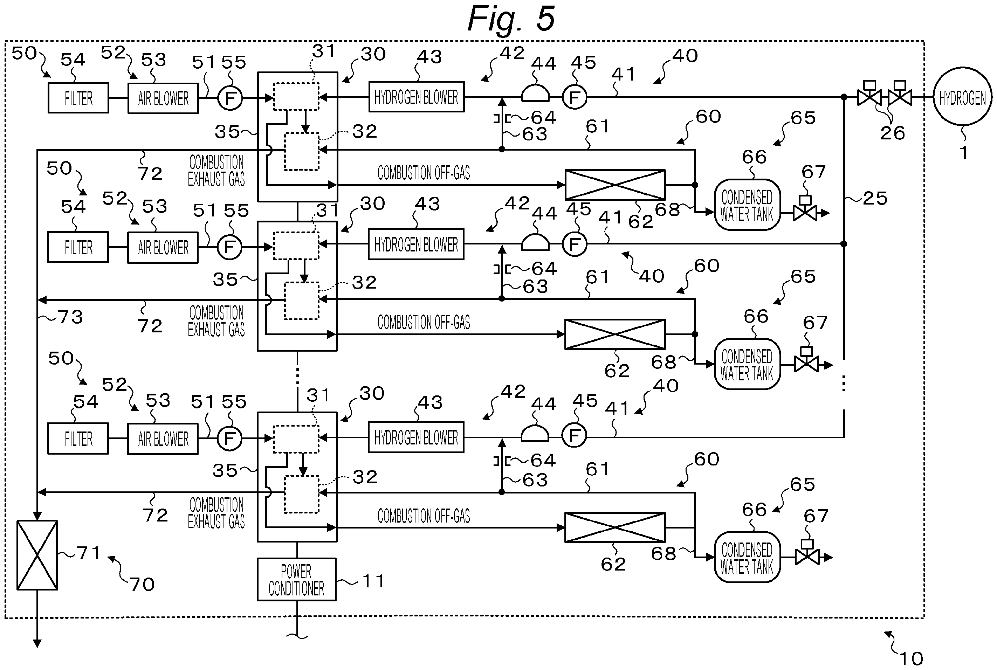

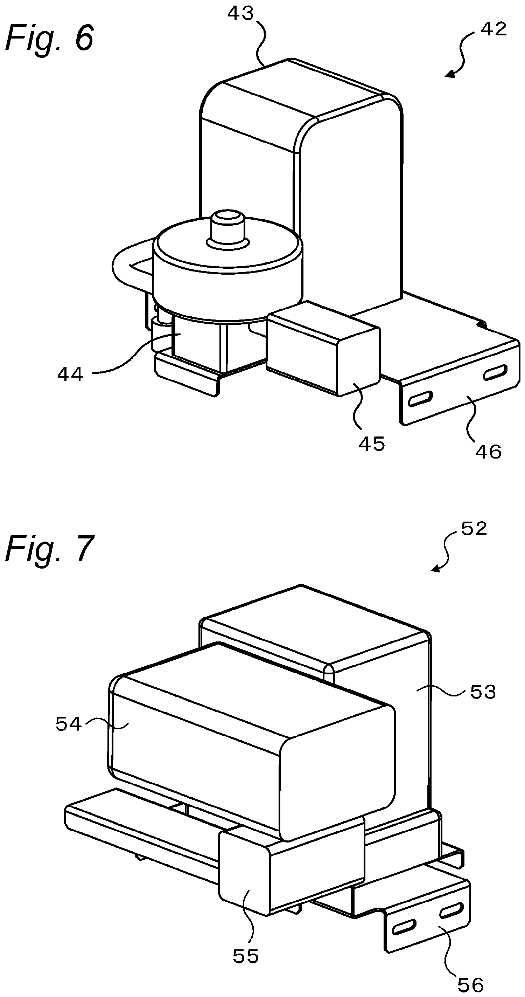

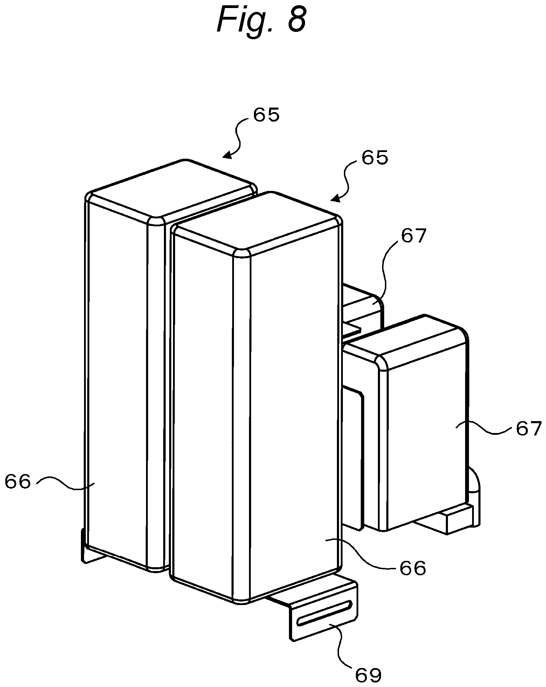

Fig. 1 is an external perspective view of a fuel cell system 10, Fig. 2 is an internal perspective view of a fuel cell unit 20 included in the fuel cell system 10, Fig. 3 is an internal side view of the fuel cell unit 20, Fig. 4 is an internal perspective view of the fuel cell unit 20 excluding a frame 21, and Fig. 5 is a schematic configuration view of the fuel cell system 10. In addition, Fig. 6 is an external perspective view of a hydrogen blower sub-assembly 42, Fig. 7 is an external perspective view of an air blower sub-assembly 52, and Fig. 8 is an external perspective view of a condensed water tank sub-assembly 65.

As shown in Fig. 1, the fuel cell system 10 of the present embodiment includes a plurality of (N) fuel cell units 20 each including a plurality of (M) power generation modules 30. The plurality of fuel cell units 20 is arranged side by side, and the power generation modules 30 are connected in series among the plurality of fuel cell units 20, thereby configuring the fuel cell system 10.

Each fuel cell unit 20 is a unit having a substantially rectangular parallelepiped appearance, and includes a frame 21 that supports and fixes various constituent members of the fuel cell units 20.

The frame 21 is configured by connecting a plurality of columns disposed on the outer periphery with beams. In the present embodiment, the columns of the frame 21 include two long front corner columns 22a and two long rear corner columns 22b disposed at the four corners, and two long side columns 22c respectively provided between one front corner column 22a and one rear corner column 22b and between the other front corner column 22a and the other rear corner column 22b. In addition, two short auxiliary columns 22d are provided between the two side columns 22c and the two rear corner columns 22b.

The beams of the frame 21 include bottom beams 23a that connect the front corner columns 22a, the rear corner columns 22b, and the side columns 22c at the bottom, and ceiling beams 23b that connect the front corner columns 22a and the side columns 22c at the ceiling. Further, the beams of the frame 21 include module fixing beams 23c provided at a plurality of upper and lower stages that connect the rear corner columns 22b and the side columns 22c above the bottom beams 23a, hydrogen blower sub-assembly fixing beams 23d provided at a plurality of upper and lower stages that connect the front corner columns 22a and the side columns 22c between the bottom beams 23a and the ceiling beams 23b, and air blower sub-assembly fixing beams 23e that connect the side columns 22c and the auxiliary columns 22d between the bottom beams 23a and the lower-stage module fixing beams 23c.

In addition, each fuel cell unit 20 includes a power generation module 30 including one fuel cell stack 31, a fuel supply system 40, an air supply system 50, a circulation system 60, an exhaust heat recovery system 70, and an electronic control unit (ECU) 80. In the present embodiment, each fuel cell unit 20 includes a plurality of (M) power generation modules 30 (fuel cell stacks 31) connected in series. In addition, one fuel supply system 40, one air supply system 50, one circulation system 60, and one electronic control unit 80 are provided for one power generation module 30.

The plurality of power generation modules 30 of the fuel cell unit 20 is fixed by bolts to the module fixing beams 23c provided at the plurality of upper and lower stages. As illustrated in Fig. 5, each power generation module 30 includes a combustor 32, a heat exchanger, and the like in addition to the fuel cell stack 31. These components are accommodated in a module case 35 having a heat-insulating property. The fuel cell stack 31 includes a plurality of solid oxide unit cells each including an electrolyte, an anode (fuel electrode) disposed on one surface side of the electrolyte, and a cathode (air electrode) disposed on the other surface side of the electrolyte. The fuel cell stack 31 generates electric power by an electrochemical reaction between hydrogen contained in fuel gas supplied from a fuel supply source 1 (for example, a hydrogen tank) and oxygen contained in air.

As shown in Figs. 2 and 3, the plurality of fuel supply systems 40 of the fuel cell unit 20 are fixed to the frame 21 so as to face the corresponding power generation modules 30 in the front-rear direction. Each fuel supply system 40 includes an anode gas pipe 41 and a hydrogen blower sub-assembly 42 including a hydrogen blower 43 connected to the anode gas pipe 41, the anode gas pipe 41 branching off from one end of a common fuel pipe 25, the other end of which is connected to the fuel supply source 1, to be connected to the anode inlet of the corresponding fuel cell stack 31. Note that the fuel pipe 25 is provided with an on-off valve 26 (dual valve). When the hydrogen blower 43 is operated, hydrogen gas of the fuel supply source 1 is supplied from the fuel pipe 25 through the anode gas pipe 41 to the corresponding power generation module 30 (anode of the fuel cell stack 31). Since the hydrogen blower 43 is installed in each anode gas pipe 41 (branch pipe), the supply amount of hydrogen gas can be controlled for each power generation module 30 by individually controlling each hydrogen blower 43.

As illustrated in Fig. 6, the hydrogen blower sub-assembly 42 includes a zero governor 44 and a flow rate sensor 45 in addition to the hydrogen blower 43. As shown in Fig. 5, the flow rate sensor 45, the zero governor 44, and the hydrogen blower 43 are disposed in this order from the upstream side with respect to the anode gas pipe 41. As illustrated in Figs. 2 and 6, the flow rate sensor 45, the zero governor 44, and the hydrogen blower 43 are attached to a bracket 46, and the bracket 46 is fixed by bolts to the hydrogen blower sub-assembly fixing beam 23d of the frame 21. The hydrogen blower sub-assembly 42 is attachable to and detachable from the frame 21 by bolts, so that maintainability can be further improved.

As shown in Figs. 2 and 3, the plurality of air supply systems 50 of the fuel cell unit 20 is collectively disposed in an empty space (below the two power generation modules 30) at the bottom of the frame 21. Each air supply system 50 includes a cathode gas pipe 51 connected to a cathode inlet of the fuel cell stack 31, and an air blower sub-assembly 52 including an air blower 53 and an air filter 54 installed in the cathode gas pipe 51. Air is sucked from the air filter 54 to the cathode gas pipe 51 by operating the air blower 53, and the sucked air is supplied through the cathode gas pipe 51 to the power generation module 30 (cathode of the fuel cell stack 31). Since the air blower 53 is installed in each cathode gas pipe 51, the supply amount of air can be controlled for each power generation module 30 by individually controlling each air blower 53.

As illustrated in Fig. 5, the air blower sub-assembly 52 includes a flow rate sensor 55 in addition to the air blower 53 and the air filter 54. In the cathode gas pipe 51, the air filter 54, the air blower 53, and the flow rate sensor 55 are disposed in this order from the upstream side with respect to the cathode gas pipe 51. As illustrated in Figs. 2 and 7, the air filter 54, the air blower 53, and the flow rate sensor 55 are attached to a bracket 56, and the bracket 56 is fixed by bolts to the bottom beam 23a or the air blower sub-assembly fixing beam 23e. The air blower sub-assembly 52 is attachable to and detachable from the frame 21 by bolts, so that maintainability can be further improved.

The plurality of circulation systems 60 of the fuel cell unit 20 includes an anode off-gas pipe 61 that connects an anode outlet of the fuel cell stack 31 and the combustor 32, a condenser 62 provided in the middle of the anode off-gas pipe 61, and a condensed water tank sub-assembly 65 including a condensed water tank 66 that stores the condensed water obtained by the condenser 62 and a drain valve 67. The condenser 62 extends in the up-down direction and is disposed between the power generation module 30 and the hydrogen blower sub-assembly 42 facing each other. The anode off-gas discharged from an anode outlet to the anode off-gas pipe 61 is supplied to the combustor 32 after water vapor contained in the anode off-gas is condensed by heat exchange with a heat exchange medium (cooling water) in the condenser 62. In addition, the condensed water generated by being condensed by the condenser 62 is stored in the condensed water tank 66 disposed at the bottom of the frame 21 through the condensed water pipe 68 branching off from the downstream of the condenser 62 in the anode off-gas pipe 61 and extending downward. The drain valve 67 is provided at the bottom of the condensed water tank 66, and the condensed water in the condensed water tank 66 is drained through the drain valve 67. As shown in Figs. 2 and 8, the condensed water tank sub-assembly 65 (the condensed water tank 66 and the drain valve 67) are attached to a bracket 69, and the bracket 69 is fixed to the bottom beam 23a of the frame 21 by bolts. The condensed water tank sub-assembly 65 is attachable to and detachable from the frame 21 by bolts, so that maintainability can be further improved.

Further, each of the circulation systems 60 also includes a reflux pipe 63 that branches off from the downstream of the condenser 62 in the anode off-gas pipe 61, and is connected between the hydrogen blower 43 and the zero governor 44 in the anode gas pipe 41 of the corresponding fuel supply system 40. An orifice 64 is formed in the reflux pipe 63, and the reflux pipe 63 recirculates a part of the anode off-gas having passed through the condenser 62 and supplies the recirculated anode off-gas from the fuel supply system 40 to the power generation module 30. The anode off-gas residue passes through the anode off-gas pipe 61 as it is and is supplied to the combustor 32 and burned in the combustor 32.

As shown in Fig. 5, the exhaust heat recovery system 70 includes a plurality of combustion exhaust gas pipes 72 having one end connected to the combustor 32 of each power generation module 30, a collecting pipe 73 connected to the other ends of the plurality of combustion exhaust gas pipes 72, and a heat exchanger 71 provided in the collecting pipe 73. The combustion exhaust gas discharged from the combustor 32 of each power generation module 30 to the combustion exhaust gas pipe 72 collects in the collecting pipe 73, exchanges heat with the heat exchange medium in the heat exchanger 71, and is then discharged to the outside air. The heat recovered by the heat exchange with the heat exchange medium is supplied to a heat utilizing device installed in a factory or the like.

The plurality of electronic control units 80 of each fuel cell unit 20 controls the operation of the corresponding power generation module 30, and is provided for each power generation module 30. Each electronic control unit 80 is configured as a microprocessor centered on a CPU, and includes a ROM, a RAM, an input/output port, and the like in addition to the CPU. Detection signals from the flow rate sensor 45 of the corresponding fuel supply system 40, the flow rate sensor 55 of the corresponding air supply system 50, and the like are input to the electronic control unit 80 via the input port. On the other hand, the electronic control unit 80 outputs control signals to the hydrogen blower 43 of the corresponding fuel supply system 40, the air blower 53 of the corresponding air supply system 50, the drain valve 67 of the corresponding circulation system 60, and the like via the output port. As illustrated in Fig. 2, the plurality of electronic control units 80 is fixed to a bracket 86, and the bracket 86 is fixed to the auxiliary column 22d by bolts.

In the present embodiment, the fuel cell unit 20 includes the plurality of (M) fuel cell stacks 31 connected in series, and the fuel cell system 10 includes the plurality of (N) fuel cell units 20 in which the fuel cell stacks 31 are connected in series among the plurality of fuel cell units 20. As a result, in the fuel cell system 10, N × M fuel cell stacks 31 are connected in series to provide a large power generation output. Therefore, in the fuel cell system 10, it is possible to respond to various power generation output requests only by changing the number of fuel cell units 20 to be coupled. In addition, the fuel cell unit 20 includes a plurality of sets of power generation module 30 (fuel cell stack 31), fuel supply system 40 (hydrogen blower sub-assembly 42), air supply system 50 (air blower sub-assembly 52), and circulation system 60 (condenser 62 and condensed water tank sub-assembly 65) each having the same configuration. As a result, the individual sizes of the constituent members (auxiliary machines) can be reduced, and these constituent members can be accommodated in a limited space of the fuel cell unit 20. As a result, the fuel cell system 10 can be further downsized while coping with a large power generation output. Further, the cost can be greatly reduced by the mass production effect.

As described above, the plurality of fuel supply systems 40 (hydrogen blower sub-assemblies 42) accommodated in one fuel cell unit 20 is disposed so as to face the corresponding power generation module 30 in the front-rear direction, so that the respective pipe lengths can be the same for the anode gas pipes 41, the anode off-gas pipes 61, or the reflux pipes 63. As a result, the pressure and the flow rate of the gas flowing through the fuel supply lines (the anode gas pipes 41, the anode off-gas pipes 61, and the reflux pipes 63) can be made the same. As a result, the specifications of the respective constituent members of the fuel supply system 40 can be made the same, and the cost can be reduced. In addition, in each electronic control unit 80, individual control logic and parameter adjustment in each power generation module 30 are unnecessary, and control is facilitated. Further, since the plurality of air supply systems 50 (air blower sub-assembly 52) are collectively disposed in the empty space at the bottom of the frame 21, the dead space can be reduced to further downsize the fuel cell unit 20.

In addition, since hydrogen gas is used as fuel gas, a reformer for reforming (steam reforming) raw fuel gas (natural gas or LP gas) and supply of water (water vapor) are unnecessary for the power generation module 30. In the present embodiment, the anode off-gas from the anode outlet is passed through the condenser 62 outside the power generation module 30 to remove at least a part of the water vapor contained in the anode off-gas, and then the anode off-gas is refluxed to the fuel supply system 40 (anode gas pipe 41), so that the efficiency of the fuel cell stack 31 can be improved. In addition, since the remaining anode off-gas from which at least a part of the water vapor has been removed is supplied to the combustor 32, the flammability of the anode off-gas in the combustor 32 can be further improved.

In the embodiment described above, the plurality of power generation modules 30 included in the fuel cell unit 20 are disposed so as to be arranged in the up-down direction, but may be disposed so as to be arranged in the right-left direction.

In the embodiment described above, the plurality of fuel supply systems 40 included in the fuel cell unit 20 is disposed so as to face the corresponding power generation modules 30, respectively. However, the plurality of fuel supply systems 40 may be disposed at positions paired with the corresponding power generation modules 30, which may be a position, for example, above the power generation modules 30 or below the power generation modules 30. However, it is desirable that the plurality of fuel supply systems 40 is each disposed near the corresponding power generation module 30.

In the embodiment described above, the air supply system 50 (air blower sub-assembly 52) is disposed in an empty space at the bottom of the frame 21. However, the air supply system 50 (air blower sub-assembly 52) may be disposed in any position as long as it is an empty space in the frame 21. For example, the air supply system 50 (air blower sub-assembly 52) may be disposed opposite to the fuel supply system 40 so as to face the power generation module 30.

In the embodiment described above, the fuel cell system 10 is configured by connecting a plurality of fuel cell units 20 having the same configuration, but may be configured by the single fuel cell unit 20.

In the embodiment described above, the plurality of fuel cell units 20 included in fuel cell system 10 is connected in series, but may be connected in parallel. That is, the plurality of fuel cell units 20 may be coupled such that the plurality of fuel cell stacks 31 connected in series in the fuel cell unit 20 are connected in parallel among the fuel cell units 20. In such case, it is possible to perform repair or inspection for each fuel cell unit 20 while operating the fuel cell system 10. For example, when some of the fuel cell units 20 fail, the failed fuel cell unit 20 can be separated from the fuel cell system 10 to operate the fuel cell system 10.

In addition, the fuel cell system may be configured as a large-scale system in which a plurality of fuel cell systems 10 is further coupled. In such case, the plurality of fuel cell systems 10 may be connected in series. That is, the plurality of fuel cell systems 10 may be coupled such that the fuel cell stacks 31 connected in series among the fuel cell units 20 are further connected in series among the fuel cell systems 10. In such case, when the number of fuel cell stacks 31 included in one fuel cell unit 20 is M, the number of fuel cell units 20 included in one fuel cell system 10 is N, and the number of fuel cell systems 10 to be coupled is L, M × N × L fuel cell stacks 31 are connected in series, and it is possible to respond to a request for a larger power generation output. In addition, the plurality of fuel cell systems 10 included in the large-scale system may be connected in parallel. In such case, similarly to fuel cell system 10 including the plurality of fuel cell units 20 connected in parallel, it is possible to perform repair or inspection for each fuel cell system 10 while operating the large-scale system.

Although the embodiments for carrying out the present disclosure have been described above with reference to the embodiments, the present disclosure is not limited to such embodiments at all, and can be carried out in various forms without departing from the gist of the present disclosure.

The present disclosure is applicable to a manufacturing industry and the like of a fuel cell system.

## Claims

1. A fuel cell system (10) comprising a fuel cell unit (20) having a substantially rectangular parallelepiped shape, the fuel cell unit (20) including:
a plurality of power generation modules (30) each including a fuel cell stack (31) that generates power using fuel gas and oxidant gas, and a heat-insulating module case (35) that accommodates the fuel cell stack (31);
a plurality of fuel supply systems (40) including a plurality of fuel supply lines that supply the fuel gas to each of the plurality of power generation modules (30);
a plurality of oxidant gas supply systems including a plurality of oxidant gas supply lines that supply the oxidant gas to each of the plurality of power generation modules (30); and
a frame (21) to which the plurality of power generation modules (30), the plurality of fuel supply systems (40), and the plurality of oxidant gas supply systems are fixed.

2. The fuel cell system (10) according to Claim 1, wherein
the plurality of power generation modules (30) of the fuel cell unit (20) are fixed to the frame (21) so as to be arranged in a predetermined direction, and
the plurality of fuel supply systems (40) of the fuel cell unit (20) are fixed to the frame (21) at positions paired with the corresponding power generation modules (30) among the plurality of power generation modules (30).

3. The fuel cell system (10) according to Claim 2, wherein the positions paired with the corresponding power generation modules (30) are positions facing the corresponding power generation modules (30).

4. The fuel cell system (10) according to any one of Claims 1 to 3, wherein constituent members of the plurality of fuel supply systems (40) or constituent members of the plurality of oxidant gas supply systems are sub-assembled and fixed to the frame (21) via a bracket (46, 56).

5. The fuel cell system (10) according to any one of Claims 1 to 3, comprising:
a plurality of condensers (62) that respectively condenses at least a part of water vapor contained in fuel off-gas discharged from the corresponding power generation modules (30) among the plurality of power generation modules (30); and
a plurality of reflux lines that respectively recirculate the fuel off-gas that has passed through the corresponding condensers (62) among the plurality of condensers (62) to the corresponding fuel supply lines, wherein
each of the plurality of fuel supply lines is provided with a governor (44) and a fuel blower in order from an upstream side,
the plurality of reflux lines reflux the fuel off-gas between the fuel blower and the governor (44) in the fuel supply lines, and
lengths of pipes in the fuel supply lines downstream of the fuel blowers are the same in the plurality of fuel supply systems (40).

6. The fuel cell system (10) according to Claim 5, comprising
a plurality of water recovery systems each including a plurality of tanks (66) storing condensed water generated in each of the plurality of condensers (62), wherein
constituent members of the plurality of water recovery systems are sub-assembled and fixed to the frame (21) via a bracket (69).

7. The fuel cell system (10) according to any one of Claims 1 to 3, comprising
a plurality of fuel cell units (20) as the fuel cell unit (20), wherein
the fuel cell stacks (31) respectively included in the plurality of fuel cell units (20) are connected in series or in parallel among the plurality of fuel cell units (20).
